(19) Europäisches Patentamt
European Patent Office
Office européen des brevets

(11) **EP 3 076 618 B1**

(12) **EUROPEAN PATENT SPECIFICATION**

(45) Date of publication and mention
of the grant of the patent:
**20.09.2017 Bulletin 2017/38**

(51) Int Cl.:
*H04L 12/851* [(2013.01)]    *H04L 12/801* [(2013.01)]
*H04L 12/825* [(2013.01)]

(21) Application number: **15382161.6**

(22) Date of filing: **31.03.2015**

(54) **A COMPUTER IMPLEMENTED METHOD, A SYSTEM AND COMPUTER PROGRAMS FOR CONGESTION CONTROL IN A TRANSPORT NODE OF A COMMUNICATION NETWORK**

COMPUTERIMPLEMENTIERTES VERFAHREN, SYSTEM UND COMPUTERPROGRAMME ZUR ÜBERLASTREGELUNG IN EINEM TRANSPORTKNOTEN EINES KOMMUNIKATIONSNETZES

PROCÉDÉ ASSISTÉ PAR ORDINATEUR, SYSTÈME ET PROGRAMMES INFORMATIQUES POUR LE CONTRÔLE DE LA CONGESTION DANS UN NOEUD DE TRANSPORT D'UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2016 Bulletin 2016/40**

(73) Proprietor: **Telefonica, S.A.**
**28013 Madrid (ES)**

(72) Inventor: **Berberana Fernández-Murias, Ignacio**
**28013 Madrid (ES)**

(74) Representative: **Carlos Hernando, Borja**
**Garrigues IP, S.L.P.**
**Hermosilla, 3**
**28001 Madrid (ES)**

(56) References cited:
**EP-A1- 2 469 778**    **US-A1- 2007 201 499**
**US-A1- 2014 307 554**    **US-B1- 8 072 887**

## Description

Technical Field

The present invention is directed, in general, to the field of communication methods and systems. In particular, the invention relates to a computer implemented method, a system and computer programs for congestion control in a transport node of a communication network in which different data packets flows associated to different functional splits with different requirements are managed.

Background of the Invention

Mobile data traffic continues to grow rapidly. The challenge for mobile operators is to support more subscribers with an increasing bandwidth demand. To meet these bandwidth requirements, there is a need for new technological solutions that assist the operators in efficiently utilizing the available network resources.

One of the trends for future mobile networks is the virtualization of part, or all, of the baseband processing associated to the radio interface in base stations. This means that this processing is instead carried out in a centralized location (a Data Center, a central office, etc.), ideally using standard information technology solutions, like the use of virtual machines and hypervisors, in an architectural solution usually identified as Cloud RAN. However, it is very unlikely that the whole mobile network can migrate to the new architecture at once, so the coexistence of distributed (i.e., located close to the antenna) and centralized processing may coexist in the infrastructure deployed by an operator.

On top of this, it must be taken into account that there are different potential options for the split between radio interface functions that remain distributed and the ones that are centralized. The information flows generated by the different functional splits may have different requirements in terms of bit rate that should be guaranteed and latency that can be tolerated.

IRTF RFC 5783 'Congestion Control in the RFC Series', defines congestion control as the feedback-based adjustment of the rate at which data is sent into the network. Congestion control in packet networks adjust the share of links with time varying bandwidth that different connections get.

Congestion control has been closely associated with TCP since 1988, with the introduction of the additive-increase, multiplicative decrease (AIMD) algorithm. TCP congestion control is designed to fully utilize the network bandwidth while keeping the entire network stable. But, as AIMD is showing its limits in a number of areas, there has also been a great deal of congestion control work outside of TCP (e.g., for real-time multimedia applications, multicast, and router-based mechanisms). Several of such proposals have been produced within the IETF and published as RFCs, along with RFCs that give architectural guidance (e.g., by pointing out the importance of performing some form of congestion control). A non-exhaustive list of examples includes High-speed TCP, Scalable TCP, H-TCP, FAST, and XCP. Several of these mechanisms are in use within the Internet.

A new area that has generated the development of new congestion control solutions is the need to support Data Center networks, that comprise thousands of machines interconnected with commodity switches. The characteristics of these networks differ from those of the Internet in many respects, such as bandwidth, latency, topologies and traffic patterns. The issue to be deal with in Data Center networks is the fact that flows can be divided into two categories that have conflicting requirements on link buffer occupancy: throughput-sensitive large flows and latency-sensitive small flows.

Some of the technologies developed for these special environments may be of application for the problem this invention intends to address, in the sense that they support the exchange of capacity for latency - i.e., reducing the capacity used in order to minimize the latency. In this sense, present invention takes some elements of the phantom queue concept, which focuses on keeping queues empty at all transport node egress ports when there are flows with strict latency requirements. The concept is motivated by the idea that it is possible to eliminate buffering and queueing delay by detecting congestion based on the link utilization approaching its capacity, rather than the queue occupancy. The phantom queue represents an imaginary flow whose unused capacity can be used to accommodate traffic increases without queue buildup.

In terms of implementation, the phantom queue is a virtual queue maintained at each transport node egress port, which sets Explicit Congestion Notification (ECN) marks based on link utilization. It simulates queue buildup for a virtual link running at a configurable speed slower than its physical capacity, without actually buffering any data packets. The mechanism marks incoming data packets with ECN when the simulated queue is above certain threshold, which is then utilized by the transport protocol to perform adaptive congestion control. Since the phantom queue deliberately caps the aggregated data packets flow rate to be strictly less than the physical capacity, the transport node buffers are kept largely unoccupied, and packets experience baseline transmission delay without queueing.

Associated to the use of phantom queues, congestion control mechanisms for Data Centers also incorporate hardware based packet pacing. Packet pacers are intended to deal with bursty traffic that causes spikes in queuing, increasing latency. Pacers are usually implemented as a simple leaky bucket with a configurable exit rate, and they should be present when the bit rate of the ingress port is higher the bit rate of the egress port.

It should be noticed that phantom queues are expected to deal with the coexistence of information flows with a high bit rate but tolerant to large latency with other characterized by a low bit rate but a very low latency requirement. On the other hand, the implementation of these mechanisms is not cost-free, but implies a reduction of the available bandwidth. Estimations available in the literature indicate that a decrease of the order of 10-15% in the bandwidth (with respect to the use of conventional congestion mechanisms) can be expected.

The first TCP based congestion control mechanisms implemented in the Internet were based on the assumption that all flows have similar requirements. However, in some environments this is clearly not the case, and it is far from clear that in these circumstances TCP based congestion control would be adequate. For example, there have been some serious concerns about the TCP performance in Data Center networks, including problems like the long completion time of short TCP flows in competition with long TCP flows, and the congestion due to TCP incast.

IETF RTP Media Congestion Avoidance Techniques (rmcat) Working Group is working in the development of congestion control mechanisms that ensure the coexistence of interactive, point-to-point real time multimedia information flows, which need low-delay, semi-reliable data delivery, with those associated with bulk transfer like FTP or bursty transfers like Web pages. However, it should be noticed that the use of these mechanisms is not adequate for the use cases under consideration for this invention, as the time scale for these mechanisms is much larger, while a higher level of reliability should be provided.

Datacenter congestion control solutions are closer to meet requirements of the invention, especially in terms of time scale. However, the algorithms and technologies developed are based on the assumption that larger blocks of information to be transported are usually more delay tolerant that small ones, usually associated to control or signaling messages. On the other hand, in the case of data packets flows associated to different functional splits in mobile networks, the data packets flows that require a larger bandwidth also require a lower latency.

EP2469778A1 refers to a multiple-algorithm congestion management of traffic on a single network device using plural congestion avoidance algorithms. The method includes separating income traffic in sub-streams of traffic, managing virtual queues corresponding to the sub-streams of traffic using congestion avoidance algorithms, and dynamically reallocating a total capacity of traffic through the single network device to the virtual queues.

US20140307554A1 describes systems, methods and computer programs adapted to receive a traffic flow having a plurality of packets, classify the traffic flow into a traffic class based on a characteristic of the traffic flow, being the traffic class selected from a plurality of classes, store an identifier of the selected class to one or more of the packets, and transmit the traffic flow according to its destination based on a priority of its selected traffic class.

US20070201499A1 describes a device, system and method for managing packet congestion with a processor that can receive a packet and can map the packet to one of several queues and to one of several classifications based on an indication of priority. The processor also checks for congestion in the queues with respect to the classification of the packet and checks for congestion in the one queue with respect to the one classification, queuing the packet if there is no congestion and dropping the packet if there is congestion.

US8072887 refers to methods, systems and computer program products for controlling enqueuing of packets in an aggregated queue including a plurality of virtual queues. According to one method, packets are received at the input side of a queuing system. Each packet is classified into a virtual queue corresponding to one of a plurality of output queues. The output queue sends backpressure messages to the enqueue controller. The enqueue controller determines whether to place the packets in the aggregated queue based on the backpressure messages

Description of the Invention

Current state of the art proposals don't allow congestion control in transport nodes that have to manage information flows associated to different functional splits with different requirements, therefore, an object of present invention is to allow the control of the congestion in transport nodes (switches/routers) of a communications network with different data packets flows that require different bit rates and tolerate different maximum latency values. These special requirements arise from a use case associated with the centralization of radio interface processing functions in mobile networks, the so-called Cloud RAN architecture, coexisting with conventional mobile network elements. Although it can be argued that C-RAN requires a specific transport infrastructure, it is clear that the possibility of sharing the former with other architectural solutions would benefit operators.

The invention takes as a starting point the use of the virtual queue concept, which is modified in order to cope with the specific requirements of the use cases indicated above. It should be noticed that the application to the use case considered in this invention of existing virtual queues, like the phantom queue mechanism (or other similar alternatives designed for the operation in Data Centers), as they have been defined in the literature, would lead to a deterioration of the performance.

To that end, as commonly in the field, embodiments of the present invention provide according to a first aspect a computer implemented method for congestion control in a transport node of a communication network. The proposed method identifies and classifies, by a classification unit, received data packets flows between fixed bit rate data packets flows and variable bit rate data packets flows, by means of checking a plurality of configuration parameters concerning the data packets flows.

Then, contrary to the known proposals in the field, the identified and classified fixed bit rate data packets flows are sent to a pacer unit that spaces the transmission of the fixed bit rate data packets flows towards an egress port of the transport node, and the plurality of configuration parameters relating to the identified and classified variable bit rate data packets flows are sent to a virtual queue unit which includes a processor running an algorithm to activate one or more congestion correction procedures. Finally, if the result obtained by said algorithm is over, or equal, at least one threshold the proposed method activates the corresponding congestion correction procedure of said one or more congestion correction procedures.

Preferably, said algorithm, which can operate either in an asynchronous or in a synchronous way, computes the bit rate the virtual queue unit is capable to support based on a baseline bit rate resulting from the subtraction of the egress port bit rate minus the capacity required to transmit fixed bit rate data packets flows.

The plurality of configuration parameters include, for the case of fixed bit rate data packets flows, a guaranteed bit rate and a maximum latency, and for the case of variable bit rate data packets flows, an average bit rate; a maximum bit rate; a maximum latency and a flow priority. The flow priority may be established from a quality indicator supported in a communication standard including at least LTE or UMTS, or may be based on subscription data.

According to an embodiment, the at least one threshold is computed by means of: $Thr_2 = min\_lat\_VB \cdot (\zeta \cdot corrected\_egress\_port\_bitrate)$, where $min\_lat\_VB$ is the minimum value of latency that cannot be exceeded by the variable bit rate data packets flows, $corrected\_eggress\_port\_bitrate$ is the available bit rate for variable bit rate data packets flows, and $\zeta$ is the virtual queue link utilization factor.

The corresponding congestion correction procedure is preferably activated, by a marker unit, by a dropper unit, or by both, based on the activation latency associated to an Explicit Congestion Notification, or ECN, mechanism. The marker unit may mark the variable bit rate data packet flow of said identified and classified variable bit rate data packets flows having: a lower priority, a measured average bit rate which deviates the most from a declared average bit rate, or a shorter measured acknowledge delay. On the other hand, the dropper unit may randomly drop variable bit rate data packet flows of said identified and classified variable bit rate data packets flows according to a drop probability.

In case the corresponding congestion correction procedure activated by the marker unit, by the dropper unit, or by both, is not enough to solve congestion, a supplementary congestion correction procedure may be further activated. The supplementary congestion correction procedure may include modifying the bit rates of the fixed bit rate data packets flows or moving the data packets flows to a less congested route.

Embodiments of the present invention also provide according to a second aspect a system for congestion control. The system includes a classification unit configured and arranged to identify and classify received data packets flows between fixed bit rate data packets flows or variable bit rate data packets flows by considering a plurality of configuration parameters concerning the data packets flows; a pacer unit configured and arranged to receive the identified and classified fixed bit rate data packets flows from the classification unit and to space the transmission of the fixed bit rate data packets flows towards an egress port of a transport node of a communication network; and a virtual queue unit configured and arranged to receive the plurality of configuration parameters relating to the identified and classified variable bit rate data packets flows from the classification unit, said virtual queue unit comprising a processor running an algorithm to activate one or more congestion correction procedures.

The system preferably also includes a marker unit and/or a dropper unit configured and arranged to activate the one or more congestion correction procedures based on an activation latency associated to an Explicit Congestion Notification, or ECN, mechanism.

According to an embodiment, the system is completely included in the transport node comprising a layer 2 or a layer 3 physical communication device including at least a switch, or alternatively, a virtual communication device including at least a virtual switch implemented with a software technology.

According to another embodiment, the system is partly included in the transport node and partly included in a transport node controller, the transport node and the transport node controller being configured and arranged to communicate with each other through a communication interface.

Other embodiments of the invention that are disclosed herein include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Brief Description of the Drawings

The previous and other advantages and features will be more fully understood from the following detailed description of embodiments, with reference to the attached figures, which must be considered in an illustrative and non-limiting manner, in which:

Fig. 1 illustrates the system of the second aspect of the invention according to an embodiment. In this case, the system architecture is completely included in a transport node of a communication network.

Fig. 2 illustrates the system of the second aspect of the invention according to another embodiment. In this case, the system architecture is split among a transport node and a transport node controller.

Fig. 3 is an illustration of the general architecture used by the present invention according to the embodiment of Fig. 1, i.e. the congestion procedure is only implemented in the transport node.

Fig. 4 is an illustration of the general architecture used by the present invention according to the embodiment of Fig. 2, i.e. the congestion procedure is partly implemented in the transport node and partly implemented in the transport node controller.

Detailed Description of Preferred Embodiments

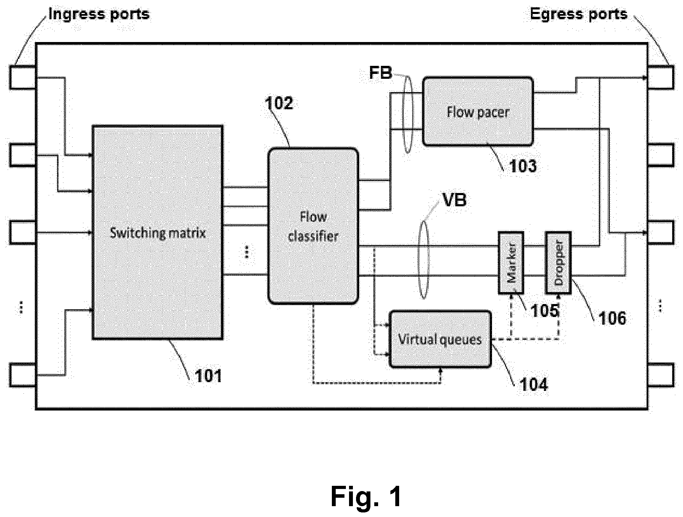

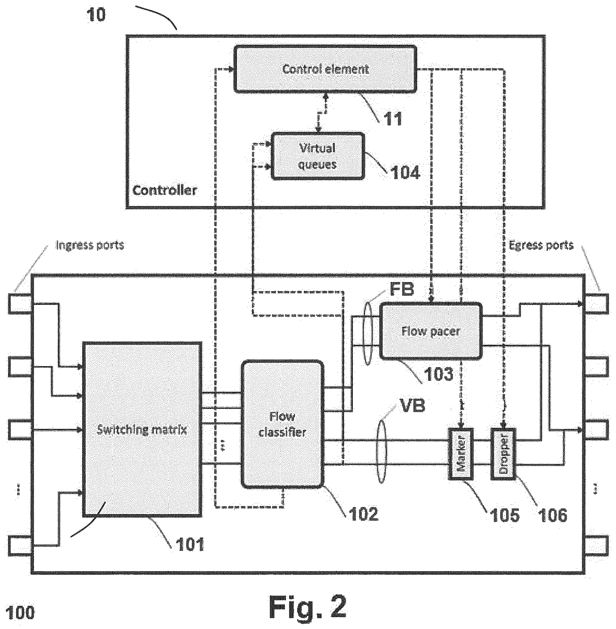

With reference to Figs. 1 or 2, present invention is implemented mainly by two components: the underlying hardware that implements the congestion control procedures and the software in charge of the configuration and the control of the behavior of the hardware component. Both entities should not necessarily be physically collocated in the transport node element 100 (e.g. a switching element), as the control software may be deployed in a separate control plane entity, like a transport node controller or SDN controller 10.

As may be seen in Figs. 1 or 2, the hardware components may include: a classification unit 102; a pacer(s) unit(s) 103 (one per egress port); a virtual queue unit(s) 104 (one per egress port); a marker unit 105 and/or a dropper unit 106.

The proposed congestion control method can work either in an asynchronous or in a synchronous way. In the first case, the congestion control would be activated any time an ingress port receives an information block. In the second case, the congestion control would be activated periodically with the periodicity established by the fixed rate data packets flow with the lower interval between data packets.

Present invention establishes the configuration of the congestion control procedure to be implemented based on the characteristics of the data packets flows that are processed by a switch 101. Then, the classification unit 102 identifies the kind of data packets flow that are directed to each egress port. A first classification distinguishes between fixed bit rate data packets flows FB and variable bit rate data packets flows VB by considering a plurality of configuration parameters.

Preferably, the data packets flows that have a fixed bit rate are characterized by two configuration parameters: a guaranteed bit rate required by the data packets flow and a maximum latency that can be supported. On the other hand, the data packets flows having variable bit rate are characterized by the following configuration parameters: average bit rate, maximum bit rate, maximum latency than can be supported and flow priority. The flow priority may be established from the quality indicator that is supported in standards like LTE or UMTS. Alternatively, the flow priority may be based on subscription data.

In an embodiment of the invention the classification of the data packets flows is based on the IEEE 802.1ad QinQ tag assumed to be used to route different flows in the network.

The identified and classified fixed bit rate data packets flows FB are then sent to the pacers 103, which in the present invention are preferably implemented as a simple leaky bucket mechanism, but in any case they are not mandatory.

Variable bit rate data packets flows VB configuration parameters are fed into the virtual queue unit 104 (data packet size in bytes) when they leave the classification unit 102. The virtual queue unit 104 comprises a processor (not illustrated) running an algorithm to simulate queue build-up for a virtual link running at a speed less, preferably calculated subtracting to the egress port speed the sum of the speeds of the data packets flows that have continuous bit rate (e.g. if there are two fixed bit rates data packets flows at 2 Gbit/s and the egress port has a bit rate of 10 Gbit/s, then the egress port of the virtual queue 104 will be dimensioned for a maximum 6 Gbit/s rate). At that moment, the algorithm applies a reduction or correction factor to the virtual egress port speed. The new size of the queue is computed and compared with a set of thresholds that have been previously configured.

If the size of the queue (after discounting the bytes that should have been transmitted) exceeds one of the configured thresholds, then the algorithm activates one of the congestion correction procedures programmed, which may be marking, by the marker unit 105, data packets with congestion using e.g., Explicit Congestion Notification (ECN) in the IP or TCP headers and/or dropping, by the dropper unit 106, data packets according the programmed algorithm.

The thresholds to be applied are calculated based on one of several potential procedures whose general formulation is the same. Two kinds of thresholds are considered by the present invention, those associated to the protection of fixed bit rate data packets flows FB (Thr1) and those associated with the protection of variable bit rate data packets flows VB (Thr2):Thr1 = min_lat_FB·($\zeta$·corrected_egress_port_bitrate) and Thr2 = min_lat_VB·($\zeta$·corrected_egress_port_bitrate), where min_lat_(FB or VB) is the minimum value of latency that cannot be exceeded by fixed rate or variable rate data packets flows. It should be noticed that this value is not the end-to-end latency that can be tolerated by the data packets flows, but the acceptable contribution from the transport node 100 to this end-to-end latency.

The corrected_eggress_port_bitrate is the available bit rate available for variable bit rate data packets flows VB (i.e., the egress port bit rate minus the sum of the constant flows bit rates).

The virtual queue link utilization factor $\zeta$ is calculated as a function of the ratio of the sum of the average bit rates of the variable bit rate data packets flows VB (average_bitratre_VBF) to the corrected_eggress_port_bitrate:

$$\zeta = \alpha \cdot [\ 1 - \Sigma\ (average\_bitratre\_VBF)/corrected\_egress\_port\_bitrate],$$

where ($\alpha \leq 1$) is a design factor that can be used to modulate this parameter in order to improve the overall performance of the procedure. This parameter, in an embodiment of the invention, is a function of the relationship between the average and maximum bit rates of the variable bitrate data packets flows. In this embodiment, $\alpha$ takes a lower value as the ratio between the maximum and average bit rates increases.

There may be thresholds associated with the activation of the different congestion correction procedures that are described in the following sections (e.g. a lower threshold to activate congestion notification procedures and a larger threshold for activating packet dropping). There may be also different thresholds associated with data packets flows with different priorities, i.e., lower threshold values for those data packets flows that have lower priority, so they are more likely to be marked or discarded.

The comparison of the threshold with occupation of the virtual queue may be carried out considering either the absolute value or a moving average of the queue occupation. In an embodiment of the invention a median filter is used for estimating the moving average queue occupation, while in other embodiment of the invention an exponential weighted moving average is used. The parameters to be used for the calculation of the moving average queue occupation (windows size of the median filter, weighting factor of the exponential moving average) will be a function of the parameters that characterize the data packets flows and the relationship between the time scales of the information data packets flows controlled.

Congestion correction procedures

Two congestion correction procedures are foreseen to be undertaken by the transport node 100 implementing the proposed method.

One of the congestion correction procedures is based on the marking of the data packets. Marking can be based on IP level ECN mechanisms or in new lower layer congestion notification protocols. As the former usually operate at a larger time scale, they cannot be used for solving short term congestion issues if the transport delay is significant. Existing ECN mechanisms are based on the in-band signalling of congestion. All data packets on a connection have a bit set in the IP header that tells the transport node that this data packet belongs to a connection that understands, and will react to ECN. Each transport node may use its own policy to implement the ECN mechanism, e.g., marking the packet by setting another bit in the IP header when the average queue size exceeds some threshold. Upon receiving any data packet with ECN set on it, the receiver echoes this information in its ACK (or equivalent feedback) message to the sender. When the sender receives an ACK or feedback message with ECN echoed, it takes appropriate congestion control measures; e.g., by reducing its window. It also sets some information in the IP header that tells the receiver that the sender has in fact reacted to this echo.

In the context of 3GPP networks, the element in charge of reacting to the congestion notification is the Policy and Charging Rules Function (PCRF), which dynamically controls and manages all data sessions. The PCRF provides policies for congestion mitigation to one or more of the following network entities:

- to the PCEF (Policy and Charging Enforcement Function) over the Gx interface;
- to the TDF (Traffic Detection Function) over the Sd interface;

- to the AF (Application Function) over the Rx interface.

Another option is the use of the Quantized Congestion Notification (QCN) algorithm, which was standardized by the DCB Task Group in March 2010 as the IEEE 802.1Qau Congestion Notification standard. QCN is a Layer 2 congestion control mechanism in which a congested switch can control the rates of Layer 2 sources (Ethernet Network Interface Cards) whose packets are passing through the switch. The algorithm essentially specifies a congestion control loop at Layer 2 similar to the TCP/RED (or DCTCP) control loops at Layer 3.

Marking of data packets in the context of the present invention is carried out with one of the following proposed solutions: marking according to the priorities established for the different data packets flows, i.e., lower priority flows are marked first; marking data packets of the flow whose measured average bit rate deviates most from the declared average bit rate; marking data packets whose measured acknowledgment delay is shorter; marking according to a combination of the former, etc.

The other congestion correction procedure consists in the dropping of data packets from the egress port queue from selected data packets flows. The mechanism would drop data packets randomly according to a drop probability, p, which is obtained from a "drop probability calculation" component. In an embodiment of the invention the drop probability is calculated based on the data packet size, which divided by inter data packet inter arrival time provides the actual bit rate $v$. This bit rate can be compared with the bit rate that would be required to keep the queue occupation below the established threshold, $v'$. In this way it is possible to calculate the reduction factor $\gamma$, such that $v'=\gamma \cdot v$. It is easy to calculate that for reducing the bit rate for $v$ to $v'$ it is necessary to drop 1 every n packets, with n being equal to $1/(1-\gamma)$. Then the dropping probability is adjusted to $(1-\gamma)$.

The advantage of this strategy is that, on top of activating the end-to-end congestion control mechanisms of TCP (e.g., reducing the transmission window), it allows for a direct decrease of the latency. It is also more effective when there is a high percentage of UDP based data packets flows. The main drawback is the negative impact it may have of the QoE of the flows affected.

Dropping packets probability will be estimated for the different data packets flows according to the occupation of the virtual queue and the priority of the data packets flows of the corresponding egress port.

According to an embodiment, in order to decide which congestion correction procedure is activated, i.e. marking or dropping data packets, the proposed method will take into account the activation latency associated to ECN mechanisms, i.e., the period of time required since the congestion is notified by marking the data packets till the sender receives the notification in corresponding ACK packet.

Alternatively, according to another embodiment, both congestion correction procedures are activated, i.e. marking and dropping of data packets, therefore strengthening the congestion control.

Moreover, in accordance with yet another embodiment, a supplementary congestion correction procedure is also activated, like modifying the bit rates of the fixed bit rate data packets flows by, e.g., reducing the number of bits per sample in the digitized I/Q signals that are transmitted over the CPRI interface. Also, there is the possibility of moving one or more data packets flows to other alternative, less congested routes.

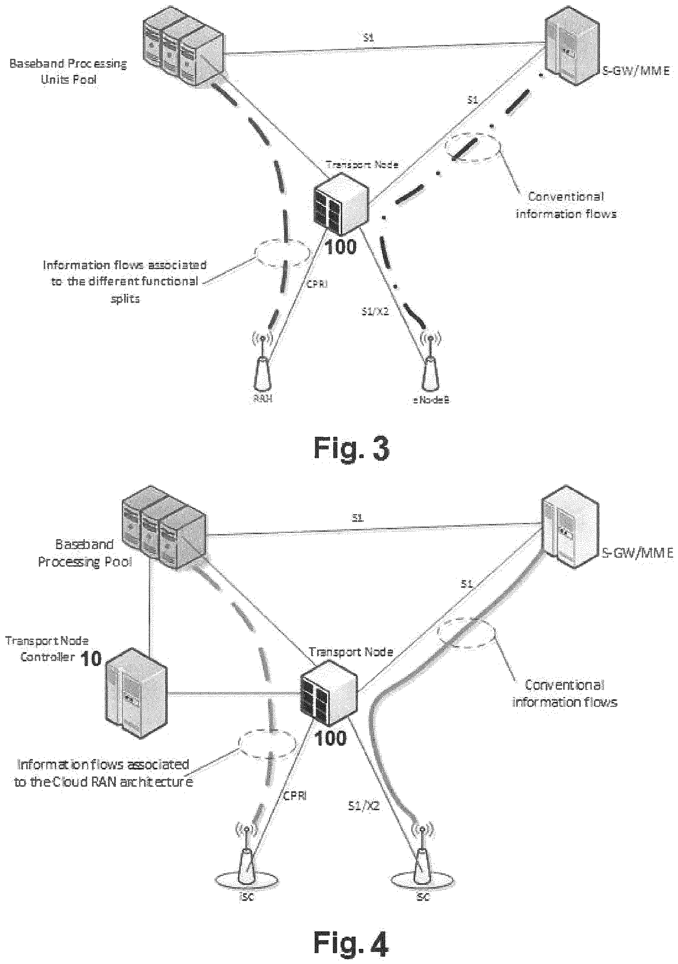

Present invention is expected to be used in the context of virtualized LTE mobile communication networks where data packets flows corresponding to different functional splits traverse a transport node 100 where congestion can happen. With reference to Fig. 3 it is illustrated the embodiment in which the proposed method is completely executed in the transport node 100, which determines the values of the configuration parameters to be used. The transport node 100 may be a layer 2/layer 3 physical switch or a virtual switch implemented with Open vSwitch or other software technology.

With reference to Fig. 4 it is illustrated the embodiment of the invention in which the proposed method is executed in part by a software controlled architecture. In this case, the control plane, in charge of configuring the values of the different configuration parameters, resides in and independent node, the transport node controller 10 that communicates with the transport node 100 through a standard interface, like, e.g. an extension of the OpenFlow protocol. However, it should be noticed that the proposed method can be supported with other solutions and protocols.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

**Claims**

1. A computer implemented method for congestion control in a transport node of a communication network, the method comprising:

   - identifying and classifying, by a classification unit (102), received data packets flows between fixed bit rate data packets flows (FB) and variable bit rate data packets flows (VB), said classification being performed upon the classification unit (102) having checked a plurality of configuration parameters concerning the data packets flows; **characterized in that** the method further comprises:
   - sending the identified and classified fixed bit rate data packets flows (FB) to a pacer unit (103) spacing the transmission of the fixed bit rate data packets flows (FB) towards an egress port of the transport node (100); and
   - sending the plurality of configuration parameters relating to the identified and classified variable bit rate data packets flows (VB) to a virtual queue unit (104), said virtual queue unit (104) including a processor running an algorithm to activate one or more congestion correction procedures, wherein in case the result obtained by said algorithm being over, or equal, at least one threshold activating a corresponding congestion correction procedure.

2. The computer implemented method of claim 1, wherein said algorithm computes a bit rate the virtual queue unit (104) is capable to support based on a baseline bit rate resulting from the subtraction of the egress port bit rate minus the capacity required to transmit fixed bit rate data packets flows.

3. The method of claim 1, wherein the plurality of configuration parameters include, for the case of fixed bit rate data packets flows (FB), a guaranteed bit rate and a maximum latency, and for the case of variable bit rate data packets flows (VB), an average bit rate; a maximum bit rate; a maximum latency and a flow priority.

4. The method of claim 3, wherein the flow priority is established from a quality indicator supported in a communication standard including at least LTE or UMTS, or is based on subscription data.

5. The method of claim 1, comprising computing said at least one threshold by means of the following expression: $Thr_2 = min\_lat\_VB \cdot (\zeta \cdot corrected\_egress\_port\_bitrate)$, where min_lat_VB is the minimum value of latency that cannot be exceeded by the variable bit rate data packets flows (VB), corrected_eggress_port_bitrate is the available bit rate for variable bit rate data packets flows (VB), and $\zeta$ is the virtual queue link utilization factor.

6. The method of any of previous claims, wherein the algorithm operates in an asynchronous or in a synchronous way.

7. The method of claim 1, wherein said corresponding congestion correction procedure being activated, by a marker unit (105) and/or a dropper unit (106), based on the activation latency associated to an Explicit Congestion Notification, or ECN, mechanism.

8. The method of claim 7, wherein the corresponding congestion correction procedure comprises marking, by the marker unit (105), the variable bit rate data packet flow (VB_x) of said identified and classified variable bit rate data packets flows (VB) having a lower priority, or a measured average bit rate which deviates the most from a declared average bit rate, or a shorter measured acknowledge delay.

9. The method of claim 7 or 8, wherein the corresponding congestion correction procedure comprises randomly dropping, by the dropper unit (106), variable bit rate data packet flows of said identified and classified variable bit rate data packets flows (VB) according to a drop probability.

10. The method of any of previous claims 7 to 9, further comprising activating a supplementary congestion correction procedure, said supplementary congestion correction procedure at least including modifying the bit rates of the fixed bit rate data packets flows (FB) or moving the data packets flows to a less congested route.

**11.** A system for congestion control, comprising:

- a classification unit (102) configured and arranged to identify and classify received data packets flows between fixed bit rate data packets flows (FB) or variable bit rate data packets flows (VB) by considering a plurality of configuration parameters concerning the data packets flows;

**characterized in that** the system further comprises:

- a pacer unit (103) configured and arranged to receive the identified and classified fixed bit rate data packets flows (FB) from the classification unit (102) and to space the transmission of the fixed bit rate data packets flows (FB) towards an egress port of a transport node (100) of a communication network; and
- a virtual queue unit (104) configured and arranged to receive the plurality of configuration parameters relating to the identified and classified variable bit rate data packets flows (VB) from the classification unit (102), said virtual queue unit (104) comprising a processor running an algorithm to activate one or more congestion correction procedures, wherein in case the result obtained by said algorithm being over, or equal, at least one threshold activating a corresponding congestion correction procedure.

**12.** The system of claim 11, further comprising a marker unit (105) and/or a dropper unit (106) configured and arranged to activate the one or more congestion correction procedures based on an activation latency associated to an Explicit Congestion Notification, or ECN, mechanism.

**13.** The system of claim 11 or 12, being completely included in the transport node (100).

**14.** The system of claim 13, wherein the transport node (100) comprises a layer 2 or a layer 3 physical communication device including at least a switch, or a virtual communication device including at least a virtual switch implemented with a software technology.

**15.** The system of claim 11 or 12, being partly included in the transport node (100) and partly included in a transport node controller (10), the transport node (100) and the transport node controller (10) being configured and arranged to communicate with each other through a communication interface.

**16.** A computer program product comprising software program code instructions which when loaded into a computer system including at least one processor controls the computer system to perform each of the method steps according to any one of claims 1 to 10.

**Patentansprüche**

**1.** Computerimplementiertes Verfahren zur Überlastregelung in einem Transportknoten eines Kommunikationsnetzes, wobei das Verfahren Folgendes umfasst:

- Identifizieren und Klassifizieren empfangener Datenpaketströme zwischen Datenpaketströmen mit festen Bitraten (FB) und Datenpaketenströmen mit variablen Bitraten(VB) durch eine Klassifizierungseinheit (102), wobei die Klassifizierung an der Klassifizierungseinheit (102) durchgeführt wird, die mehrere Konfigurationsparameter in Bezug auf die Datenpaketströme überprüft hat; **dadurch gekennzeichnet, dass** das Verfahren ferner Folgendes umfasst:

- Senden der identifizierten und klassifizierten Datenpaketströme mit festen Bitraten (FB) an eine Taktgebereinheit (103), welche die Übertragung der Datenpaketströme mit festen Bitraten (FB) in Richtung eines Ausgangsports des Transportknotens (100) verteilt; und
- Senden der mehreren Konfigurationsparameter, die sich auf die identifizierten und klassifizierten Datenpaketströme mit variablen Bitraten (VB) beziehen, an eine virtuelle Warteschlangeneinheit (104), wobei die virtuelle Warteschlangeneinheit (104) einen Prozessor beinhaltet, der einen Algorithmus ausführt, um ein oder mehrere Überlastkorrekturverfahren zu aktivieren, wobei im Fall, dass das Ergebnis, das durch den Algorithmus erhalten wird, über oder mindestens gleich einem Schwellenwert ist, ein entsprechendes Überlastkorrekturverfahren aktiviert wird.

**2.** Computerimplementiertes Verfahren nach Anspruch 1, wobei der Algorithmus eine Bitrate berechnet, welche die virtuelle Warteschleifeneinheit unterstützen kann, auf Grundlage einer Baseline-Bitrate, die sich aus der Subtraktion der Bitrate des Ausgangsports minus der erforderlichen Kapazität ergibt, die notwendig ist, um Datenpaketströme mit festen Bitraten zu übertragen.

3. Verfahren nach Anspruch 1, wobei die mehreren Konfigurationsparameter im Fall von Datenpaketströmen mit festen Bitraten (FB) eine garantierte Bitrate und eine maximale Latenz und in dem Fall von Datenpaketströmen mit variablen Bitraten (VB) eine durchschnittliche Bitrate; eine maximale Bitrate; eine maximale Latenz und eine Datenstrompriorität enthalten.

4. Verfahren nach Anspruch 3, wobei die Datenstrompriorität von einem Qualitätsindikator festgelegt wird, der in einem Kommunikationsstandard unterstützt wird, der mindestens LTE oder UMTS enthält, oder auf Teilnehmerdaten basiert.

5. Verfahren nach Anspruch 1, welches das Berechnen von mindestens einem Schwellenwert mittels des folgenden Ausdrucks umfasst: $Thr_2 = min\_lat\_VB \cdot (\zeta\ corrected\_egress\_port\_bitrate)$, wobei $min\_lat\_VB$ der Minimalwert der Latenz ist, der nicht durch die Datenpaketströme mit variablen Bitraten (VB) überschritten werden kann, $corrected\_eggress\_port\_bitrate$ die verfügbare Bitrate für Datenpaketströme mit variabler Bitrate (VB) ist und $\zeta$ der Nutzungsfaktor der virtuellen Warteschleife ist.

6. Verfahren nach einem der vorhergehenden Ansprüche, wobei der Algorithmus asynchron oder synchron arbeitet.

7. Verfahren nach Anspruch 1, wobei das Überlastkorrekturverfahren durch eine Markierungs- (105) und/oder eine Verwerfungseinheit (106) auf Grundlage der Aktivierungslatenz, die mit einem Explicit-Congestion-Notifications-, oder ECN-, Mechanismus (Überlastmitteilung) in Verbindung steht, aktiviert wird.

8. Verfahren nach Anspruch 7, wobei das entsprechende Überlastkorrekturverfahren das Markieren des Datenpaketstroms mit variablen Bitraten (VB_x) der identifizierten und klassifizierten Datenpaketströme mit variablen Bitraten (VB) durch die Markierungseinheit (105) umfasst, welche eine niedrigere Priorität oder eine gemessene durchschnittliche Bitrate, die am weitesten von einer erklärten durchschnittlichen Bitrate abweicht, oder eine kürzere gemessene Bestätigungsverzögerung aufweisen.

9. Verfahren nach Anspruch 7 oder 8, wobei das entsprechende Überlastkorrekturverfahren zufälliges Verwerfen der Datenpaketströme mit variablen Bitraten der identifizierten und klassifizierten Datenpaketströme mit variablen Bitraten (VB) gemäß einer Verwerfungswahrscheinlichkeit durch die Verwerfungseinheit (106) umfasst.

10. Verfahren nach einem der vorhergehenden Ansprüche 7 bis 9, ferner das Aktivieren eines ergänzenden Überlastkorrekturverfahrens umfassend, wobei das zusätzliche Überlastkorrekturverfahren mindestens das Modifizieren der Bitraten der Datenpaketströme mit festen Bitraten (FB) oder das Bewegen der Datenpaketströme zu einem weniger überlasteten Übertragungsweg enthält.

11. System zur Überlastregelung, das Folgendes umfasst:

- eine Klassifizierungseinheit (102), die so konfiguriert und angeordnet ist, dass sie empfangene Datenpaketströme zwischen Datenpaketströmen mit festen Bitraten (FB) oder Datenpaketströmen mit variablen Bitraten (VB) unter Berücksichtigung mehrerer Konfigurationsparameter bezüglich der Datenpaketströme identifiziert und klassifiziert; **dadurch gekennzeichnet, dass** das System ferner Folgendes umfasst:

- eine Taktgebereinheit (103), die so konfiguriert und angeordnet ist, dass sie die identifizierten und klassifizierten Datenpaketströme mit festen Bitraten (FB) von der Klassifizierungseinheit (102) empfängt und die Übertragung der Datenpaketströme mit festen Bitraten (FB) in Richtung eines Ausgangsports eines Transportknotens (100) eines Kommunikationsnetzwerkes verteilt: und
- eine virtuelle Warteschlangeneinheit (104), die so konfiguriert und angeordnet ist, dass sie die mehreren Konfigurationsparameter in Bezug auf die identifizierten und klassifizierten Datenpaketströme mit variablen Bitraten (VB) von der Klassifizierungseinheit (102) empfängt, wobei die virtuelle Warteschlangeneinheit (104) einen Prozessor umfasst, der einen Algorithmus ausführt, um eine oder mehrere Überlastkorrekturverfahren zu aktivieren, wobei sie im Fall, dass das Ergebnis, das durch den Algorithmus erhalten wird, über oder mindestens gleich einem Schwellenwert ist, ein entsprechendes Überlastkorrekturverfahren aktiviert wird.

**12.** System nach Anspruch 11, das ferner eine Markierungs- (105) und/oder eine Verwerfungseinheit (106) umfasst, die so konfiguriert und angeordnet sind, dass sie eine oder mehrere Überlastkorrekturverfahren auf der Grundlage einer Aktivierungslatenz, die einem Explicit-Congestion-Notification-, oder ECN-, Mechanismus zugeordnet ist, aktiviert.

**13.** System nach Anspruch 11 oder 12, das vollständig in dem Transportknoten (100) enthalten ist.

**14.** System nach Anspruch 13, wobei der Transportknoten (100) eine physikalische Schicht 2- oder Schicht 3-Kommunikationsvorrichtung umfasst, die mindestens einen Switch oder eine virtuelle Kommunikationsvorrichtung enthält, die mindestens einen virtuellen Switch enthält, der mit einer Softwaretechnologie implementiert ist.

**15.** System nach Anspruch 11 oder 12, das teilweise in dem Transportknoten (100) und teilweise in einem Transportknotenregler (10) enthalten ist, wobei der Transportknoten (100) und der Transportknotenregler (10) so konfiguriert und angeordnet sind, dass sie über eine Kommunikationsschnittstelle miteinander kommunizieren können.

**16.** Computerprogrammprodukt, das Softwareprogrammcodebefehle enthält, welches, wenn es in ein Computersystem geladen wird, das mindestens einen Prozessor enthält, das Computersystem steuert, um jeden der Verfahrensschritte nach einem der Ansprüche 1 bis 10 auszuführen.

## Revendications

**1.** Procédé mis en oeuvre par ordinateur pour le contrôle de l'encombrement dans un noeud de transport d'un réseau de communication, le procédé comprenant :

- l'identification et la classification, par une unité de classification (102), de flux de paquets de données reçus entre les flux de paquets de données à débit binaire fixe (BF) et les flux de paquets de données à débit binaire variable (BV), ladite classification étant réalisée après que l'unité de classification (102) a vérifié une pluralité de paramètres de configuration relatifs aux flux de paquets de données; **caractérisé en ce que** le procédé comprend en outre :

- l'envoi des flux de paquets de données à débit binaire fixe (BF) identifiés et classifiés à une unité de meneur (103) espaçant la transmission des flux de paquets de données à débit binaire fixe (BF) vers un port de sortie du noeud de transport (100) ; et
- l'envoi de la pluralité de paramètres de configuration relatifs aux flux de paquets de données à débit binaire variable (BV) identifiés et classifiés à une unité de queue virtuelle (104), ladite unité de queue virtuelle (104) comportant un processeur exécutant un algorithme pour activer une ou plusieurs procédures de correction d'encombrement, dans lequel dans le cas où le résultat obtenu par ledit algorithme est au-dessus, ou égal, au moins au seuil activant une procédure de correction d'encombrement correspondante.

**2.** Procédé mis en oeuvre par ordinateur selon la revendication 1, dans lequel ledit algorithme calcule un débit binaire que l'unité de queue virtuelle (104) est capable de supporter en fonction d'un débit binaire de départ provenant de la soustraction du débit binaire du port de sortie moins la capacité requise pour transmettre les flux de paquets de données à débit binaire fixes.

**3.** Procédé selon la revendication 1, dans lequel la pluralité de paramètres de configuration comporte, pour le cas de flux de paquets de données à débit binaire fixe (BF), un débit binaire garanti et une latence maximale, et pour le cas de flux de paquets de données à débit binaire variable (BV), un débit binaire moyen; un débit binaire maximal; une latence maximale et une priorité de flux.

**4.** Procédé selon la revendication 3, dans lequel la priorité de flux est établie à partir d'un indicateur de qualité supporté dans une norme de communication comportant au moins LTE ou UMTS, ou est basée sur les données d'inscription.

**5.** Procédé selon la revendication 1, comprenant le calcul dudit au moins un seuil au moyen de l'expression suivante :
$Thr_2 = min\_lat\_VB \cdot (\zeta$ débit binaire_de port_de sortie_corrigé), où min_lat_BV est la valeur minimale de latence qui ne peut pas dépassée par les flux de paquets de données à débit binaire variable (BV), débit binaire_de port_de sortie_corrigé est les flux de paquets de données à débit binaire variable (BV), et $\zeta$ est le facteur d'utilisation du lien de queue virtuelle.

**6.** Procédé selon l'une quelconque des revendications précédentes, dans lequel l'algorithme opère de façon asynchrone ou synchrone.

**7.** Procédé selon la revendication 1, dans lequel ladite procédure de correction d'encombrement correspondante est activée, par une unité de marqueur (105) et/ou une unité de pipette (106), basée sur la latence d'activation associée à un mécanisme de notification d'encombrement explicite, ou ECN.

**8.** Procédé selon la revendication 7, dans lequel ladite procédure de correction d'encombrement correspondante comprend le marquage, par l'unité de marqueur (105), du flux de paquets de données à débit binaire variable (BV x) desdits flux de paquets de données à débit binaire variable (BV) identifiés et classifiés ayant une plus faible priorité, ou un débit binaire moyen mesuré qui diffère la plupart d'un débit binaire moyen déclaré, ou un retard admis plus court.

**9.** Procédé selon la revendication 7 ou 8, dans lequel la procédure de correction d'encombrement correspondante comprend le coulage aléatoire, par l'unité d'injecteur (106), des flux de paquets de données à débit binaire variable desdits flux de paquets de données à débit binaire variable (BV) identifiés et classés selon une probabilité d'injection.

**10.** Procédé selon l'une quelconque des revendications précédentes 7 et 9, comprenant en outre l'activation d'une procédure de correction d'encombrement supplémentaire, ladite procédure de correction d'encombrement supplémentaire comportant au moins la modification des débits binaires des flux de paquets de données à débit binaire fixes (BF) ou le déplacement des flux de paquets de données à une route moins encombrée.

**11.** Système pour le contrôle de l'encombrement, comprenant :

- une unité de classification (102) configurée et disposée pour identifier et classifier des flux de paquets de données reçus entre des flux de paquets de données à débit binaire fixes (BF) en considérant une pluralité de paramètres de configuration concernant les flux de paquets de données; **caractérisé en ce que** le procédé comprend en outre :

- une unité de meneur (103) configurée et disposée pour recevoir les flux de paquets de données à débit binaire fixe (BF) identifiés et classifiés depuis une unité de classification (102) et pour espacer la transmission des flux de paquets de données à débit binaire fixe (BF) vers un port de sortie d'un noeud de transport (100) d'un réseau de communication; et
- une unité de queue virtuelle (104) configurée et disposée pour recevoir la pluralité de paramètres de configuration relatifs aux flux de paquets de données à débit binaire variable (BV) identifiés et classifiés depuis l'unité de classification (102), ladite unité de queue virtuelle (104) comportant un processeur exécutant un algorithme pour activer une ou plusieurs procédures de correction d'encombrement, dans lequel dans le cas où le résultat obtenu par ledit algorithme est au-dessus, ou égal, au moins au seuil activant une procédure de correction d'encombrement correspondante.

**12.** Système selon la revendication 11, comprenant en outre une unité de marqueur (105) et/ou une unité d'injecteur (106) configurée et disposée pour activer la une ou plusieurs procédures de correction d'encombrement basées sur une latence d'activation associée à un mécanisme de notification d'encombrement explicite, ou ECN.

**13.** Système selon la revendication 11 ou 12, étant complètement compris dans le noeud de transport (100).

**14.** Système selon la revendication 13, dans lequel le noeud de transport (100) comprend un dispositif de communication physique à couche 2 ou à couche 3 comportant au moins un interrupteur, ou un dispositif de communication virtuelle comportant au moins un interrupteur virtuel mis en oeuvre avec une technologie logicielle.

**15.** Système selon la revendication 11 ou 12, étant partiellement inclus dans le noeud de transport (100) et partiellement inclus dans un contrôleur de noeud de transport (10), le noeud de transport (100) et le contrôleur de noeud de transport (10) étant configurés et disposés pour communiquer entre eux à travers une interface de communication.

**16.** Produit de logiciel informatique comprenant des instructions de code de programme logiciel qui, lorsqu'il est chargé dans un système informatique comportant au moins un processeur, contrôle le système informatique pour réaliser chacune des étapes du procédé selon l'une quelconque des revendications 1 à 10.

**Fig. 1**

Fig. 2

**Fig. 3**

**Fig. 4**

**EP 3 076 618 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2469778 A1
- US 20140307554 A1
- US 20070201499 A1
- US 8072887 B